# EUROPEAN PATENT SPECIFICATION

(11) **EP 3 261 915 B1**
(45) Date of publication and mention of the grant of the patent: **02.10.2019**
(21) Application number: 16707060.6
(22) Date of filing: 24.02.2016
(51) Int. Cl.: B63B 22/00, F16L 1/24

(54) **ADJUSTABLE BUOYANCY CLAMP FOR HOSE**
EINSTELLBARE AUFTRIEBSKLEMME FÜR SCHLAUCH
PINCE DE FLOTTABILITÉ RÉGLABLE POUR TUYAU

(30) Priority: 24.02.2015 EP 15290040
(43) Date of publication of application: 03.01.2018
(73) Proprietor: Trelleborg Industrie SAS, 63050 Clermont-Ferrand Cedex (FR)
(72) Inventor: PETIT, Jonathan, 63000 Clermont-Ferrand (FR)
(74) Representative: Ström & Gulliksson AB
(86) International application number: PCT/EP2016/053870
(87) International publication number: WO 2016/135197

(56) References cited:
- EP-A2- 1 980 778
- CN-U- 201 651 546
- GB-A- 965 270
- US-A- 4 159 189

## Description

### TECHNICAL FIELD

The present invention relates to buoy systems for marine hoses, and more specifically to an inflatable buoy device, also called a floater of adjustable buoyancy, for such a hose.

### BACKGROUND

Today, floating and submarine hoses are commonly used to transfer e.g. hydrocarbon liquids in marine environment. For submarine hoses, many different kinds of configurations exist depending on the equipment, the water depth, the fluid density which is to be conveyed, the site conditions, etc. One method is to provide different types of buoy systems in order to control the buoyancy of the hose, where buoys are clamped at predetermined locations along the hose. The hose may be used on the surface of the water, on the bottom of the sea, or vertically down from a ship or a calm buoy to e.g. a PLEM (Pipeline End Manifold) located on the seabed. For different purposes it is desirable to control the buoyancy of the hose. One problem with the existing buoy systems is that they are not easily adjustable to receive different products of different density that are conveyed in the hose. For example the density of one conveyed product may differ from another conveyed product which means that the load on the hose may vary impacting the configuration, thus the hose loading may lead to premature failure. If the load varies on the hose, the load also varies on the buoy system. These buoy systems are often permanent and it would require divers to be able to add or remove buoy modules, or collar floaters, from the buoy system on the submarine line in order to adjust the configuration to the new load. Examples of such systems are disclosed in WO2014149267A1, US7179144B2 and US4159189A. Further background art is known from GB965270A, CN201651546U and EP1980778A2.

Another problem with existing buoy systems is when a system and a marine hose is located on the sea surface, e.g. near shores, and ships need to pass through the area.

### SUMMARY

An object of the present invention is to provide improvements over prior art. This object is achieved by the concept defined in the appended independent claims; certain embodiments being set forth in the related dependent claims.

In a first aspect of the present invention, there is provided a buoy device according to claim 1 for a marine hose or the like, wherein the buoy device is configured to at least partly enclose the hose. The buoy device comprises a shell unit and a bladder unit which is arranged within the shell unit and which is inflatable and/or deflatable by means of a fluid in order to adjust the buoyancy of the buoy device during use. One of the advantages with this buoy device is that it is not a permanent device, it may instead be inflated or deflated depending on the situation and the purpose of the marine hose. Thus, it is in no need for external help, such as divers when adjusting the position of the hose. A further advantage is that the buoy device can be mounted on existing hoses. There is thus no need for an expensive special hose. Yet another advantage is that the bladder unit is protected by the shell unit such that the risk of damaging the bladder unit due to wear on the seabed is reduced.

The bladder unit of the buoy device of the first aspect comprises a first bladder element and a second bladder element, wherein the first bladder element is arranged within the first shell element and the second bladder element is arranged within the second shell element. This facilitates the assembly of the bladder unit within the shell unit, and during assembly of the buoy device to the hose the bladder unit does not have to be taken into consideration. Another advantage of having two separate bladder elements each located in a shell element is that the buoy device may be clamped onto the marine hose at any location without dismantling the hose structure. Yet another advantage with a two-parted bladder unit is that, in the unlikely event that one of the bladder elements is punctuated, there is another bladder element, still being inflated, and providing buoyancy to the buoy device.

In an embodiment, the shell unit comprises a number of openings through which water may flow during the inflation and deflation of the bladder unit. The openings make it even easier to inflate and deflate the bladder unit, as the water easily can flow into the device from the outside and vice versa.

In another embodiment, the shell unit comprises a first shell element and a second shell element, which in an assembled state are connected to each other. The first and second shell element simplify the assembly of the buoy device to or around the marine hose.

In yet another embodiment, the first and second shell elements have a substantially semi-circular shape. This is an advantage, especially during assembly, to have a shape that corresponds to the marine hose.

In an alternative embodiment, a first end portion of the first shell element is hinged to a first end portion of the second shell element, and a second end portion of the first shell element is connected by connection means to a second end portion of the second shell element in an assembled state. This even more simplifies the assembly of the buoy device around the marine hose.

In an embodiment, the buoy device further comprises at least one pressure relief valve which is connected to the bladder unit and which is configured to prevent an over pressure in the bladder unit, which could lead to the bladder element bursting.

In another embodiment, the buoy device further comprises at least one inflation socket which is connected to the bladder unit and which is configured to be connected to an air supply source, wherein the inflation socket is configured to inflate and/or deflate the bladder unit. In a preferred embodiment, the inflation socket is connected to a control unit which is configured to control the amount of fluid inflated into the bladder unit, in order to adjust the buoyancy of the buoy device during use.

In a second aspect of the invention, there is provided a system of buoy devices according to the first aspect where the buoy devices are configured to be arranged spaced apart from each other when attached to a marine hose. The different buoy devices may be equally or differently inflated, in order to adjust and enhance the buoyancy of the marine hose. In a third aspect of the invention, there is provided a system of buoy devices according to the first aspect where one buoy device is configured to be arranged adjacent at least one other buoy device when attached to a marine hose. In that way, extra buoyancy is provided in certain locations, which may be extra exposed.

In a fourth aspect of the invention, there is provided a marine hose comprising a number of buoy devices. An advantage with such a hose is the possibility of adjusting the buoyancy of the hose.

In a fifth aspect of the invention there is provided a method of adjusting the buoyancy of a buoy device according to the first aspect, comprising the steps of:
- inflating or deflating a bladder unit in order to provide a desired buoyancy of the buoy device, wherein a control unit of the buoy device controls the amount of fluid in the bladder unit, and
- allowing water to flow through a least one opening of a shell unit of the buoy device. This is an advantageous method in that the buoyancy can be freely regulated by the amount of fluid provided into the bladder unit.

In a sixth aspect of the invention, there is provided a method for controlling the buoyancy of a marine hose at least partly enclosed by at least one buoyancy device. The method comprises the step of inflating or deflating one or more of the at least one buoyancy device according to the first aspect. This is advantageous when different buoyancies are desired at different locations along the marine hose.

### BRIEF DESCRIPTION OF THE DRAWINGS

Embodiments of the invention will be described in the following, reference being made to the appended drawings which illustrate non-limiting examples of how the inventive concept can be reduced into practice.
Fig. 1 is a perspective front view of a buoy device of an embodiment,
Fig. 2 is a perspective back view of the buoy device in Fig. 1,
Fig. 3 is a side view of the buoy device in Fig. 1,

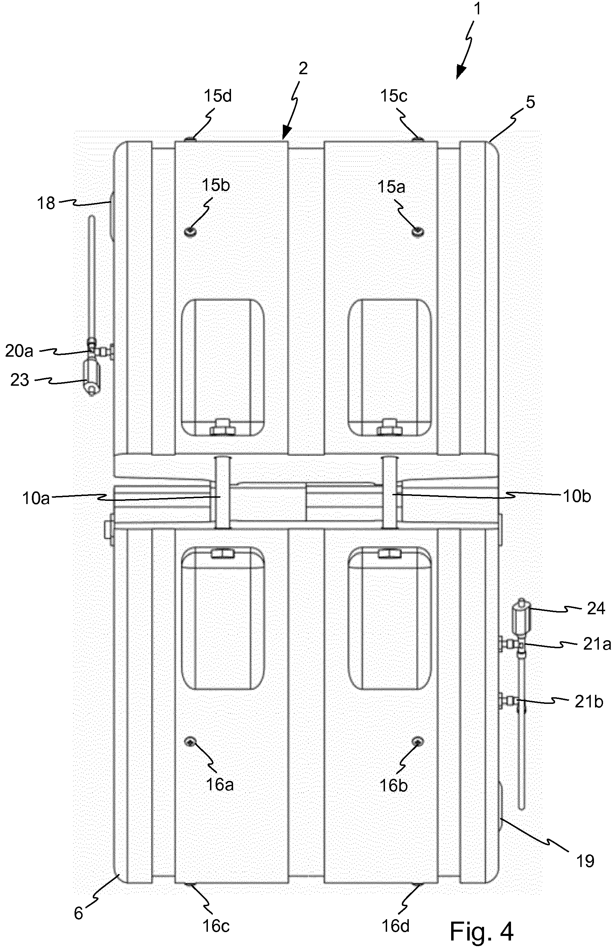

Fig. 4 is a top view of the buoy device in Fig. 1,

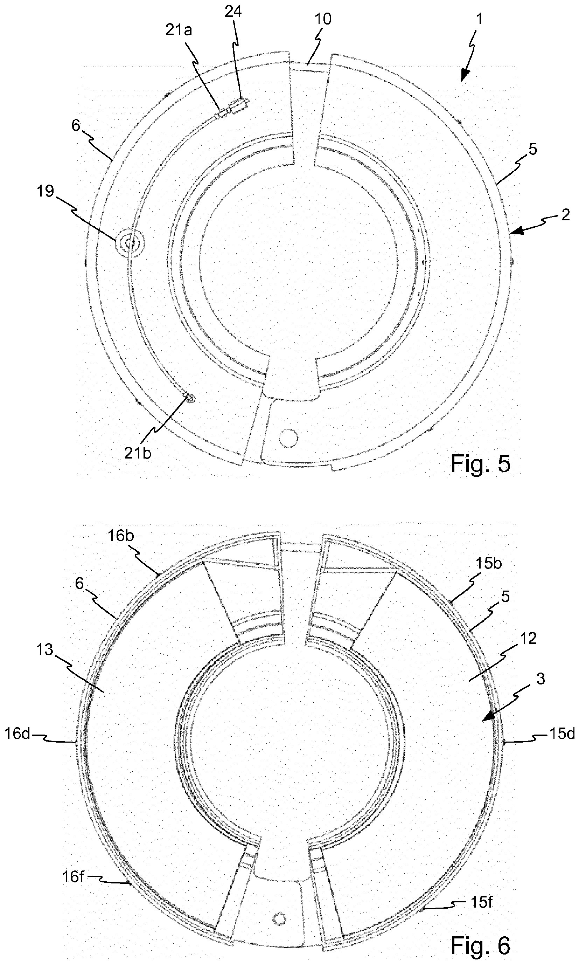

Fig. 5 is a front view of the buoy device in Fig. 1,
Fig. 6 is a cross section view of the buoy device in Fig. 5,
Fig. 7 is a cross section view of a part of the buoy device in a deflated state,
Fig. 8 is a cross section view of the part in Fig. 7 in an inflated state,
Fig. 9 is a perspective view of a kit of buoy devices according to an embodiment of the present invention,
Fig. 10 is a partial view of the kit of buoy devices in Fig. 9 on a larger scale, Fig. 11 shows a buoy system according to an embodiment connected to a marine hose located on the sea surface,
Fig. 12 shows the buoy system and the marine hose in Fig. 11 when a ship passes by, and
Fig. 13 is a side view of two different buoyancy scenarios

### DETAILED DESCRIPTION OF EMBODIMENTS

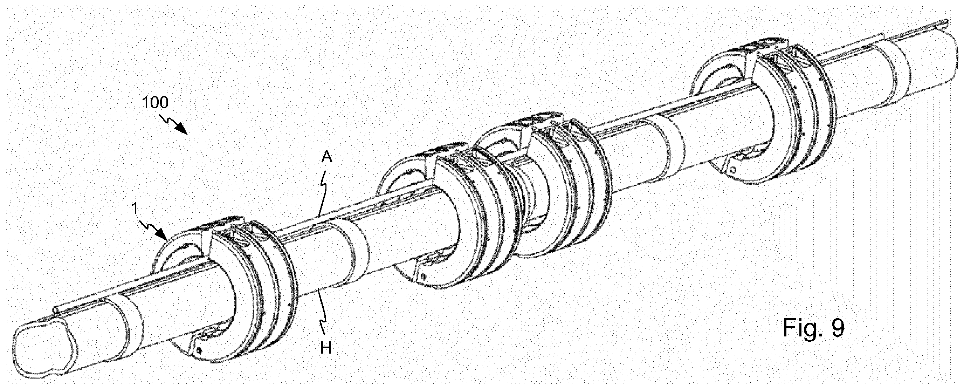

With reference to the drawings, there is illustrated a buoy device 1 which from now on is also called a buoy clamp and which may also be seen as a floater of adjustable buoyancy. The buoy clamp 1 is configured to, at least partly or, as in this case totally, enclose a marine hose H during use in order to adjust the buoyancy of it (see Figs 9-10). The hose H is e.g. a marine hose which is used in sea water for transporting various fluids.

The buoy device 1 comprises a shell unit 2 and a bladder unit 3 arranged within the shell unit 2. The whole bladder unit 3 fits within the shell unit 2, such that the shell unit 2 covers the major part of the periphery of the bladder unit 3. The shell unit 2 is annularly formed such that it can be placed around the periphery of the marine hose H, which extends through the central opening of the shell unit 2. This is shown e.g. in Figs 9-10.

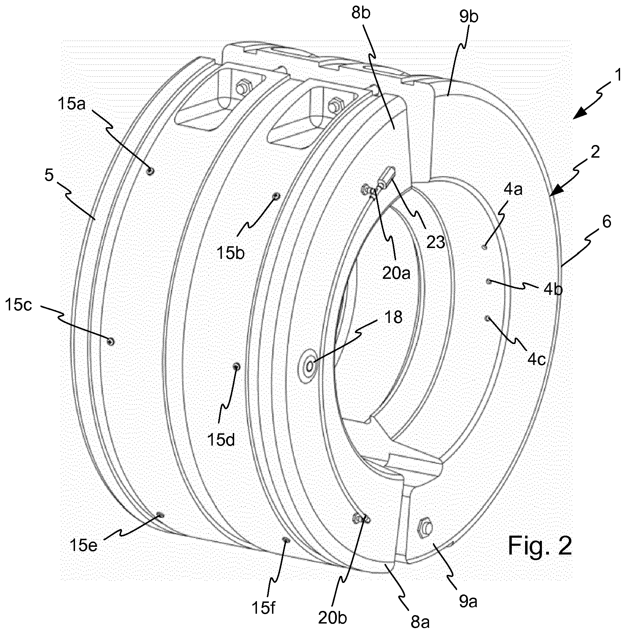

The bladder unit 3 is inflatable and/or deflatable by means of a fluid, e.g. a gas like air, in order to adjust the buoyancy of the buoy device 1 during use. The shell unit 2 comprises a number of openings 4a-4c (shown e.g. in Fig. 2) through which e.g. sea water may flow during the inflation and deflation of the bladder unit 3.

Fig. 2 shows an example of three openings 4a-4c located on the inner surface of the shell unit 2. Preferably, the number of openings 4 and their locations in the shell unit 2 are such that the buoy clamp 1 is always allowed to take in water no matter its location or orientation in water. This means that the openings 4 preferably are not only located in one area of the shell unit 2 since the buoy clamp 1 is then not able to take in water if this area is located only surrounded by air. The openings 4 may not only be located on the inner surface of the shell unit 2 but also on its sides or outer surface.

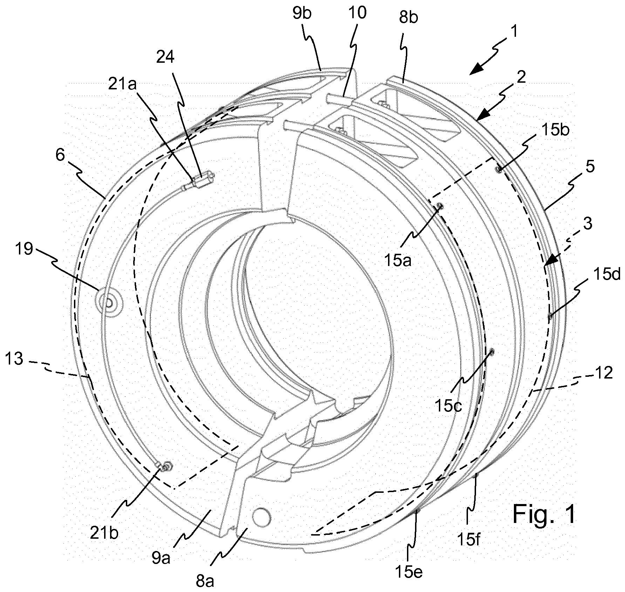

The shell unit 2 comprises a first shell element 5 and a second shell element 6 which in an assembled state are connected to each other, see e.g. Figs 1 and 2. Each first and second shell element 5, 6 has a substantially semi-circular shape for enclosing a hose H. The size of the two shell elements 5, 6 depends on the size of the hose H and may therefor be made with different inner diameter in order to fit different sizes of hoses. The shell unit 2 is preferably made of a plastic material, e.g. HDPE; most preferred it is made of a rigid or semi-rigid plastics material.

A first end portion 8a of the first shell element 5 is hinged to a first end portion 9a of the second shell element 6, and a second end portion 8b of the first shell element 5 is connected by connection means 10 to a second end portion 9b of the second shell element 6 in an assembled state. The connection means are preferably screws 10a, 10b.

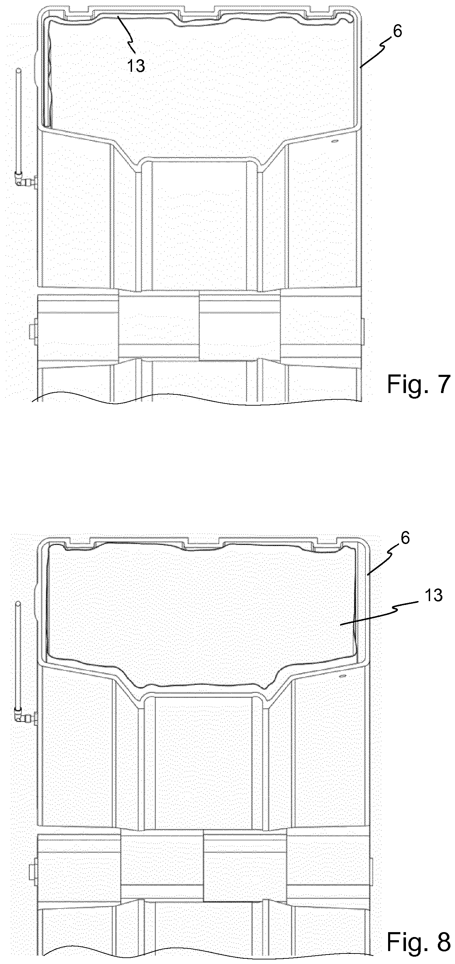

The bladder unit 3 comprises a first bladder element 12 and a second bladder element 13. The first bladder element 12 is arranged within the first shell element 5 and the second bladder element 13 is arranged within the second shell element 6, see Fig. 1. Each bladder element 12, 13 may be in a deflated state or an inflated state, see examples in Figs 7 and 8.

In Fig. 7 the bladder element 13 is deflated and it is curled up along the periphery of the shell element 6. In Fig. 8, the bladder element 13 is inflated and almost fills the inner space of the shell element 6. Preferably, the bladder elements 12, 13 are inflated by air or any other gas, but they can in other embodiments be inflated by any type of fluid. The buoyancy of the buoy clamp 1 is determined on the inflation of the bladder unit 3, i.e. of the bladder elements 12, 13.

One part of the buoy clamp 1, where the first shell element 5 and the first bladder element 12 constitute this one part, is preferably identical to the other part of the buoy clamp 1, where the second shell element 5 and the second bladder element 13 constitute the other part. When assembling the buoy clamp 1 one of the parts is rotated 180°. The buoy clamp 1 is thus mirror symmetrical.

Each bladder element 12, 13 is fastened to respective shell element 5, 6 by fastening means 15a-f, 16a-f, preferably bolts, which extend though the outer surface of each shell element 5, 6. The bladder unit 3, i.e. the two bladder elements 12, 13 is made of a textile which is coated with a flexible rubber material, e.g. Hypalon® rubber.

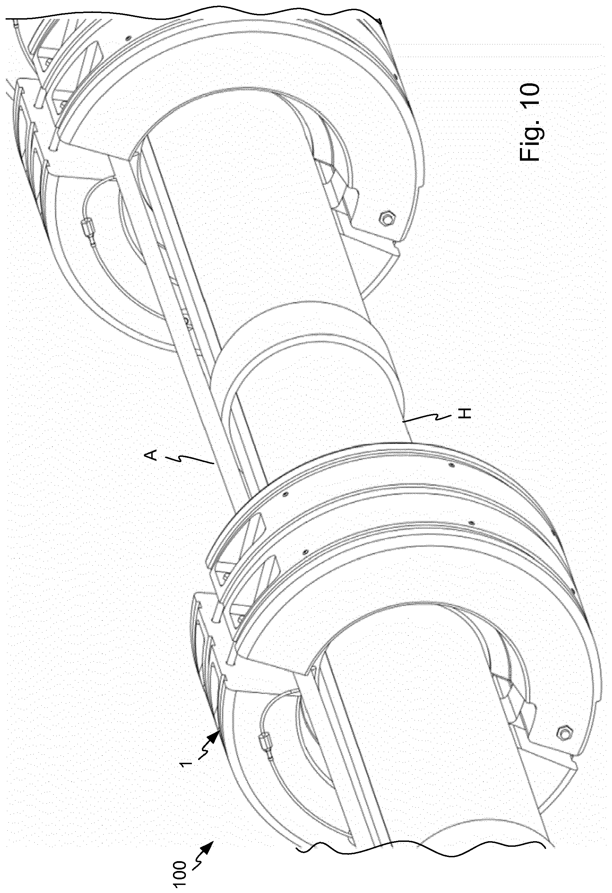

Further, the buoy clamp 1 includes two pressure relief valves 18, 19, where one is arranged on each shell element 5, 6. The relief valves 18, 19 are connected to the bladder unit 3 and are configured to prevent an over pressure in the same. The buoy clamp 1 also includes four inflation sockets 20a, 20b, 21a, 21b, where two are arranged on each shell element 5, 6. The inflation sockets 20a, 20b, 21a, 21b are connected to the bladder unit 3, and to an air supply source A, e.g. an air supply pipe, see Figs 9 and 10. They are configured to inflate and partly deflate each bladder element 12, 13 preferably by means of air from the air supply source A. In the described embodiment, the air supply source A is a main air conduit which runs in parallel to the hose H and feeds each module 1 in parallel.

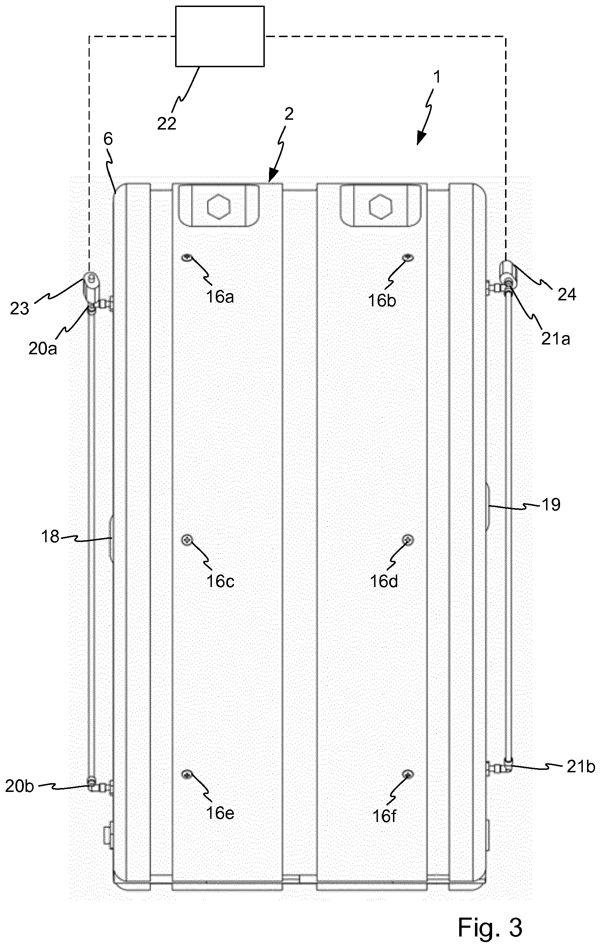

The inflation sockets 20a, 20b, 21a, 21b are also connected to a control unit 22, seen in Fig. 3, by which an operator can control and activate/deactivate inflation or deflation. Furthermore, the control unit 22 is preferably arranged on a ship or on land so that the operator remotely can control the operation. The control unit 22 is able to control the flow rate inflated into the bladder unit 3 in order to adjust the buoyancy of the buoy device 1 during use in e.g. water. In an embodiment the inflation sockets 20a, 20b, 21a, 21b is connected to the control unit 22 in order to, together with the pressure relief valve 18, 19, control the simultaneous inflation of several bladder units 3 located at different water depths.

The control unit 22 includes two flow control modules 23, 24 which are connected to two of the inflation sockets 20a, 21a. The flow control modules 23, 24 are able to limit the air flow rate and thus limit the inflation speed and the exhausted water flow rate. Furthermore, the flow control modules 23, 24 allow for a pressure drop during the inflation phase. Deeper positioned modules 1 are permitted to inflate whereas modules 1 positioned closer to the surface are already exhausting air by their relief valves 18, 19. Preferably, the air inflating the buoy device 1 is injected from the surface and exhausted at the surface by the same hose or pipe. During deflation, the air runs mainly through a non return valve (not shown) of the flow control modules 23, 24 in order to control the deflation speed. A fast deflation is ensured in order to sink the hose H rapidly when the offloading is completed. Preferably the air, inflating the buoy device 1 is injected from the surface and exhausted at the surface by the same hose or pipe.

With reference to Figs 9 and 10, a system 100 of buoy devices 1 is illustrated. The buoy devices 1 are, in this embodiment, configured to be arranged spaced apart from each other when attached to the hose H. In an alternative embodiment (not shown), the buoy devices are configured to be arranged adjacent at least one other buoy device when attached to the hose. Each buoy device 1 is preferably individually controlled by a control unit (not shown) such that the buoyancy of each buoy device is individually adjusted.

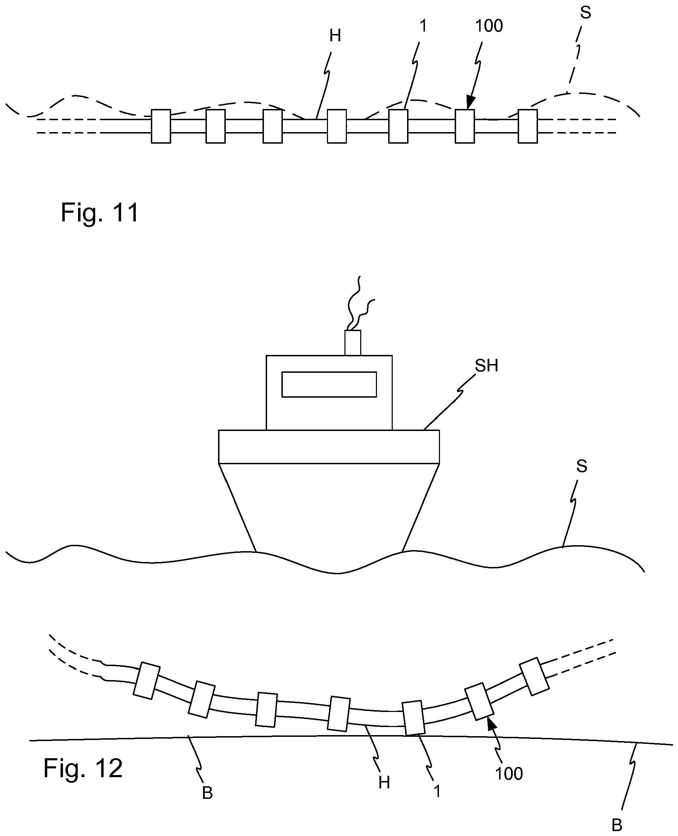

Figs 11 and 12 illustrate how the buoy system 100 affects the marine hose H in practice when e.g. a ship SH needs to pass through the area where the hose H is located. When the hose H is located on the sea surface S, the buoy devices 1 of the buoy system 100 are completely inflated. When the hose H needs to be lowered below the sea surface S, all or at least some of the buoy devices 1 are deflated. One example is when the line is sunk, all the buoy devices are deflated so that the hose is resting on the seabed B, see Fig. 12. Once the ship SH has passed, the buoy devices 1 are again inflated and the hose H returns to the surface.

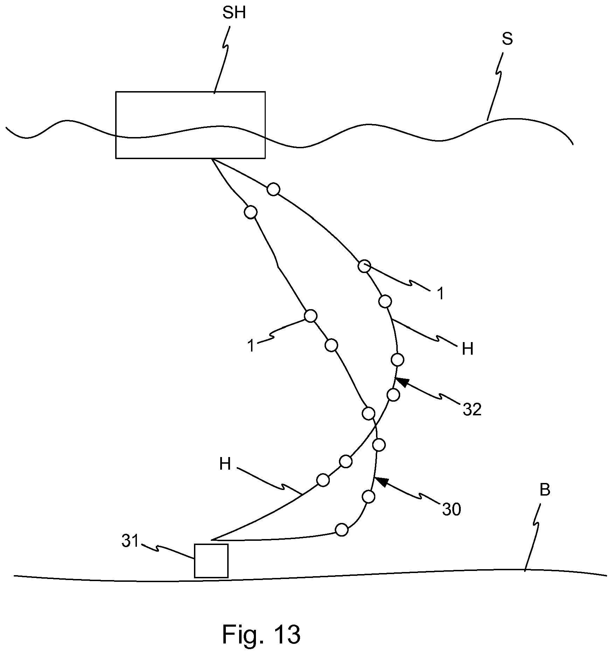

Fig. 13 shows two scenarios. In a first scenario 30, a fluid with high density is passed through the hose H which inter connects the ship or marine structure SH and a bottom structure 31. The buoyancy modules 1 are deflated. This causes the lower part of the hose H to sink towards the seabed B, forming an unfavourable J-shape. The hose H becomes deformed and the attachment to the bottom structure 31 becomes unfavourable due to the formation of the hose H. In order to adjust the formation of the hose H, at least some of the buoyancy modules 1 are inflated, as shown in the second scenario 32, such that the lower part of the hose H is lifted and obtains its preferred shape 32 (here shown as an inverted C-shape). The inflated buoyancy modules 1 counteract the weight of the heavy fluid in the hose H and thus relieve the hose attachment to the bottom structure 31.

In order to adjust the buoyancy of a buoy device 1, also called a buoy clamp, which is configured to enclose a hose H during use in e.g. water, a method can be used which includes the steps of:
- inflating or deflating the bladder unit 3 in order to provide a desired buoyancy of the buoy device 1, wherein the control unit of the buoy device 1 controls the amount of fluid in the bladder unit 3, and
- allowing e.g. water to flow through a least one opening 4a-4c of the shell unit 2 of the buoy device 1.

Bladder units of the described embodiments have the advantage that they can be provided with more or less fluid for different buoyancies. All hose arrangements provided with at least one buoyancy device provide the advantage of having the possibility of adjustable buoyancy. Reasons for a desire of changing the buoyancy are e.g. to move the hose towards the sea bed, thus allowing for ships to pass over it, or to adjust the shape of the hose curvature due to the fluid density inside the hose.

In the described embodiments, the buoyancy of the hose is controlled locally or along the whole marine hose. This enhances the flexibility of the concept.

Finally, although the inventive concept has been described above with reference to specific embodiments, it is not intended to be limited to the specific form set forth herein. Rather, the invention is limited only by the accompanying claims and, other embodiments than the specific above are equally possible within the scope of these appended claims. In this context, it should be mentioned that the inventive concept is not only applicable to marine hoses but also to other kinds of hoses and tubes where the buoyancy needs to be adjusted.

## Claims

1. A buoy device for a marine hose (H) or the like; wherein the buoy device (1) is configured to at least partly enclose said hose (H); wherein the buoy device (1) comprises a shell unit (2) and a bladder unit (3) which is arranged within the shell unit (2) and which is inflatable and/or deflatable by means of a fluid in order to adjust the buoyancy of the buoy device (1) during use; **characterised in that** the bladder unit (3) comprises a first bladder element (12) and a second bladder element (13); and wherein the first bladder element (12) is arranged within a first shell element (5) and the second bladder element (13) is arranged within a second shell element (6).

2. The buoy device according to claim 1, wherein the shell unit (2) comprises a number of openings (4a-4c) through which water may flow during the inflation and deflation of the bladder unit (3).

3. The buoy device according to claim 1 or 2, wherein the first shell element (5) and the second shell element (6), in an assembled state are connected to each other.

4. The buoy device according to claim 3, wherein the first and second shell elements (5, 6) have a substantially semi-circular shape.

5. The buoy device according to claim 3 or 4, wherein a first end portion (8a) of the first shell element (5) is hinged to a first end portion (9a) of the second shell element (6), and a second end portion (8b) of the first shell element (5) is connected by connection means (10) to a second end portion (9b) of the second shell element (6) in an assembled state.

6. The buoy device according to any one of the preceding claims, further comprising at least one pressure relief valve (18, 19) which is connected to the bladder unit (3) and which is configured to prevent an over pressure in said bladder unit (3).

7. The buoy device according to any one of the preceding claims, further comprising at least one inflation socket (20a, 20b, 21a, 21b) which is connected to the bladder unit (3), and which is configured to be connected to an air supply source (A); wherein said inflation socket (20a, 20b, 21a, 21b) is configured to inflate and/or deflate said bladder unit (3); and wherein said inflation socket (20a, 20b, 21a, 21b) preferably is connected to a control unit (22) which is configured to control the flow rate of fluid inflated into the bladder unit (3), in order to adjust the buoyancy of the buoy device (1) during use.

8. The buoy device according to any one of the preceding claims, wherein the bladder unit (3) is made of a rubber material.

9. A system of buoy devices according to any one of the preceding claims, wherein the buoy devices (1) are configured to be arranged spaced apart from each other when attached to a marine hose (H); or wherein one buoy device (1) is configured to be arranged adjacent at least one other buoy device (1) when attached to a marine hose (H).

10. The system according to claim 9, wherein each buoy device (1) is individually controlled by a control unit (22) such that the buoyancy of each buoy device (1) is individually adjusted.

11. A marine hose comprising a number of buoy devices (1) as claimed in any one of the claims 1-8.

12. A method of adjusting the buoyancy of a buoy device (1) according to any one of the claims 1-8, said method comprising the steps of:
- inflating or deflating a bladder unit (3) in order to provide a desired buoyancy of the buoy device (1), wherein a control unit (22) of the buoy device (1) controls the amount of fluid in the bladder unit (3), and
- allowing water to flow through at least one opening (4a-4c) of a shell unit (2) of the buoy device (1).

13. A method for controlling the buoyancy of a marine hose (H) at least partly enclosed by at least one buoy device (1) according to any one of the claims 1-8, by inflating or deflating one or more of said at least one buoy device (1).

## Patentansprüche

1. Bojenvorrichtung für einen Offshore-Schlauch (H) oder dergleichen, wobei die Bojenvorrichtung (1) dazu ausgestaltet ist, den Schlauch (H) wenigstens teilweise zu umschließen; wobei die Bojenvorrichtung (1) eine Hülleneinheit (2) und eine Blaseneinheit (3), die innerhalb der Hülleneinheit (2) angeordnet ist und die mittels eines Fluids aufblasbar und/oder entleerbar ist, um bei Gebrauch den Auftrieb der Bojenvorrichtung (1) anzupassen, umfasst; **dadurch gekennzeichnet, dass** die Blaseneinheit (3) ein erstes Blasenelement (12) und ein zweites Blasenelement (13) umfasst; und wobei das erste Blasenelement (12) innerhalb eines ersten Hüllenelements (5) angeordnet ist und das zweite Blasenelement (13) innerhalb eines zweiten Hüllenelements (6) angeordnet ist.

2. Bojenvorrichtung nach Anspruch 1, wobei die Hülleneinheit (2) eine Anzahl von Öffnungen (4a-4c) umfasst, durch die während des Aufblasens und Entleerens der Blaseneinheit (3) Wasser fließen kann.

3. Bojenvorrichtung nach Anspruch 1 oder 2, wobei das erste Hüllenelement (5) und das zweite Hüllenelement (6) in einem zusammengebauten Zustand miteinander verbunden sind.

4. Bojenvorrichtung nach Anspruch 3, wobei das erste und zweite Hüllenelement (5, 6) im Wesentlichen eine Halbkreisform aufweisen.

5. Bojenvorrichtung nach Anspruch 3 oder 4, wobei ein erster Endabschnitt (8a) des ersten Hüllenelements (5) an einen ersten Endabschnitt (9a) des zweiten Hüllenelements (6) angelenkt ist und in einem zusammengebauten Zustand ein zweiter Endabschnitt (8b) des ersten Hüllenelements (5) durch Verbindungsmittel (10) mit einem zweiten Endabschnitt (9b) des zweiten Hüllenelements (6) verbunden ist.

6. Bojenvorrichtung nach einem der vorangehenden Ansprüche, die ferner wenigstens ein Druckentlastungsventil (18, 19) umfasst, das mit der Blaseneinheit (3) verbunden ist und das dazu ausgestaltet ist, einen Überdruck in der Blaseneinheit (3) zu verhindern.

7. Bojenvorrichtung nach einem der vorangehenden Ansprüche, die ferner wenigstens eine Aufblasbuchse (20a, 20b, 21a, 21b) umfasst, die mit der Blaseneinheit (3) verbunden ist und die dazu ausgestaltet ist, mit einer Luftzufuhrquelle (A) verbunden zu werden; wobei die Aufblasbuchse (20a, 20b, 21a, 21b) dazu ausgestaltet ist, die Blaseneinheit (3) aufzublasen oder zu entleeren; und wobei die Aufblasbuchse (20a, 20b, 21a, 21b) vorzugsweise mit einer Steuereinheit (22) verbunden ist, die dazu ausgestaltet ist, die Durchflussrate von Fluid, das in die Blaseneinheit (3) eingeblasen wird, zu regeln, um bei Gebrauch den Auftrieb der Bojenvorrichtung (1) anzupassen.

8. Bojenvorrichtung nach einem der vorangehenden Ansprüche, wobei die Blaseneinheit (3) aus einem Gummimaterial gefertigt ist.

9. System von Bojenvorrichtungen nach einem der vorangehenden Ansprüche, wobei die Bojenvorrichtungen (1) dazu ausgestaltet sind, voneinander beabstandet angeordnet zu sein, wenn sie an einem Offshore-Schlauch (H) angebracht sind; oder wobei eine Bojenvorrichtung (1) dazu ausgestaltet ist, wenigstens einer anderen Bojenvorrichtung (1) benachbart angeordnet zu sein, wenn sie an einem Offshore-Schlauch (H) angebracht ist.

10. System nach Anspruch 9, wobei jede Bojenvorrichtung (1) einzeln durch eine Steuereinheit (22) derart gesteuert wird, dass der Auftrieb jeder Bojenvorrichtung (1) einzeln angepasst wird.

11. Offshore-Schlauch, der eine Anzahl von Bojenvorrichtungen (1) nach einem der Ansprüche 1-8 umfasst.

12. Verfahren zum Anpassen des Auftriebs einer Bojenvorrichtung (1) nach einem der Ansprüche 1-8, wobei das Verfahren folgende Schritte umfasst:
- Aufblasen oder Entleeren einer Blaseneinheit (3), um einen gewünschten Auftrieb der Bojenvorrichtung (1) zu bewirken, wobei eine Steuereinheit (22) der Bojenvorrichtung (1) die Menge an Fluid in der Blaseneinheit (3) regelt, und
- Zulassen, dass Wasser durch wenigstens eine Öffnung (4a-4c) einer Hülleneinheit (2) der Bojenvorrichtung (1) fließt.

13. Verfahren zum Regeln des Auftriebs eines Offshore-Schlauchs (H), der wenigstens teilweise von wenigstens einer Bojenvorrichtung (1) nach einem der Ansprüche 1-8 umschlossen wird, durch Aufblasen oder Entleeren einer oder mehrerer der wenigstens einen Bojenvorrichtung (1).

## Revendications

1. Dispositif de bouée destiné à un tuyau marin (H), ou analogue; dans lequel le dispositif de bouée (1) est conçu pour au moins entourer partiellement ledit tuyau (H); dans lequel le dispositif de bouée (1) comprend une unité enveloppe (2) et une unité vessie (3) qui est disposée à l'intérieur de l'unité enveloppe (2) et qui peut être gonflée et/ou dégonflée au moyen d'un fluide afin de régler la flottabilité du dispositif de bouée (1) en cours d'utilisation; **caractérisé en ce que** l'unité vessie (3) comprend un premier élément (12) de vessie et un second élément (13) de vessie; et dans lequel le premier élément (12) de vessie est disposé à l'intérieur d'un premier élément (5) d'enveloppe et le second élément (13) de vessie est disposé à l'intérieur d'un second élément (6) d'enveloppe.

2. Dispositif de bouée selon la revendication 1, dans lequel l'unité enveloppe (2) comprend un certain nombre d'ouvertures (4a-4c) à travers lesquelles peut s'écouler de l'eau pendant le gonflage et le dégonflage de l'unité vessie (3).

3. Dispositif de bouée selon la revendication 1 ou 2, dans lequel le premier élément (5) d'enveloppe et le second élément (6) d'enveloppe, dans un état assemblé, sont reliés l'un à l'autre.

4. Dispositif de bouée selon la revendication 3, dans lequel les premier et second éléments (5, 6) d'enveloppe ont une forme sensiblement semi-circulaire.

5. Dispositif de bouée selon la revendication 3 ou 4, dans lequel une première partie d'extrémité (8a) du premier élément (5) d'enveloppe est articulée par rapport à une première partie d'extrémité (9a) du second élément (6) d'enveloppe, et une seconde partie d'extrémité (8b) du premier élément (5) d'enveloppe est reliée par un moyen de liaison (10) à une seconde partie d'extrémité (9b) du second élément (6) d'enveloppe dans un état assemblé.

6. Dispositif de bouée selon l'une quelconque des revendications précédentes, comprenant en outre au moins une soupape de surpression (18, 19) qui est raccordée à l'unité vessie (3) et qui est conçue pour empêcher une surpression dans ladite unité vessie (3).

7. Dispositif de bouée selon l'une quelconque des revendications précédentes, comprenant en outre au moins une prise de gonflage (20a, 20b, 21a, 21b) qui est raccordée à l'unité vessie (3) et qui est conçue pour être raccordée à une source d'alimentation en air (A); dans lequel ladite prise de gonflage (20a, 20b, 21a, 21b) est conçue pour gonfler et/ou dégonfler ladite unité vessie (3); et dans lequel ladite prise de gonflage (20a, 20b, 21a, 21b) est de préférence raccordée à une unité de control (22) qui est conçue pour contrôler le débit de fluide amené dans l'unité vessie (3), afin de régler la flottabilité du dispositif de bouée (1) en cours d'utilisation.

8. Dispositif de bouée selon l'une quelconque des revendications précédentes, dans lequel l'unité vessie (3) est constituée d'un matériau de caoutchouc.

9. Système de dispositifs de bouées selon l'une quelconque des revendications précédentes, dans lequel les dispositifs de bouées (1) sont conçus pour être disposés à l'écart les uns des autres lorsqu'ils sont fixés à un tuyau marin (H); ou dans lequel un dispositif de bouée (1) est conçu pour être disposé adjacent à au moins un autre dispositif de bouée (1) lorsqu'il est fixé à un tuyau marin (H) .

10. Système selon la revendication 9, dans lequel chaque dispositif de bouée (1) est contrôlé individuellement par une unité de contrôle (22) de façon à régler individuellement la flottabilité de chaque dispositif de bouée (1).

11. Tuyau marin comprenant un certain nombre de dispositifs de bouées (1) selon l'une quelconque des revendications 1 à 8.

12. Procédé de réglage de la flottabilité d'un dispositif de bouée (1) selon l'une quelconque des revendications 1 à 8, ledit procédé comprenant les étapes consistant à:
- gonfler ou dégonfler une unité vessie (3) afin d'obtenir une flottabilité souhaitée du dispositif de bouée (1), dans lequel une unité de contrôle (22) du dispositif de bouée (1) contrôle la quantité de fluide amené dans l'unité vessie (3), et
- permettre à de l'eau de s'écouler à travers au moins une ouverture (4a-4c) d'une unité enveloppe (2) du dispositif de bouée (1).

13. Procédé de commande de la flottabilité d'un tuyau marin (H) au moins partiellement entouré par au moins un dispositif de bouée (1) selon l'une quelconque des revendications 1 à 8, par un gonflage ou un dégonflage d'un ou de plusieurs dudit au moins un dispositif de bouée (1).
